# EUROPÄISCHE PATENTSCHRIFT

(11) **EP 0 491 324 B1**
(45) Veröffentlichungstag und Bekanntmachung des Hinweises auf die Patenterteilung: **30.03.1994**
(21) Anmeldenummer: 91121540.8
(22) Anmeldetag: 16.12.1991
(51) Int. Cl.: A47J 27/092, A47J 27/08

(54) **Deckel für Kochtöpfe mit umgelegtem Rand**
Lid for a cooking vessel with an inwardly curved external edge
Couvercle pour un récipient de cuisson à bord roulé

(30) Priorität: 18.12.1990 DE 4040489
(43) Veröffentlichungstag der Anmeldung: 24.06.1992
(73) Patentinhaber: SILIT-WERKE GMBH & CO. KG, D-88499 Riedlingen (DE)
(72) Erfinder: Schalong, Heinz, W-7943 Ertingen (DE); Fingerle, Hans, W-7940 Riedlingen (DE)
(74) Vertreter: Goddar, Heinz J., Dr.

(56) Entgegenhaltungen:
- DE-A- 2 701 527
- DE-A- 2 722 675
- DE-A- 3 010 205
- DE-A- 3 636 261
- DE-U- 7 715 930
- US-A- 2 191 975
- US-A- 2 257 039
- US-A- 4 294 377

## Beschreibung

Die Erfindung betrifft einen Deckel für Kochtöpfe mit umgelegtem Rand, mit zwei bogenförmigen Spannsegmenten, die jeweils an einer Schwenkachse angelenkt sind und die mit einem um eine senkrechte Achse verschwenkbaren Verschlußhebel verbunden sind, der am Außenrand des Deckels angeordnet ist, mit einem in den Innenrand des Deckels eingelegten Dichtring und mit einem Dampfdruckventil.

Ein derartiger Deckel gemäß dem Oberbegriff des Anspruchs 1 ist aus der DE-OS 27 22 675 beziehungsweise aus der gleichlautenden DE-GM 77 15 930 bekannt. Üblicherweise verwendete Kochtöpfe können durch Verwendung dieses Deckels zu einem Dampfdrucktopf umgestaltet werden.

Es kann nunmehr ein einziger Deckel für Töpfe unterschiedlicher Tiefe benutzt werden, wenn nur deren Durchmesser dem des Deckels angepaßt ist. Der bekannte Deckel hat allerdings den Nachteil, daß er gegen Fehlbedienung unzureichend gesichert ist. Insbesondere kann er auch dann abgenommen werden, wenn im Garraum des Kochtopfes noch ein Überdruck herrscht. Im Umgang mit Kochtöpfen, die mit einem bekannten Deckel ausgestattet sind, besteht daher eine erhebliche Verletzungsgefahr durch entweichende heiße Dämpfe.

Es ist daher die Aufgabe der Erfindung, einen Deckel zu schaffen, mit dem im Haushalt üblicherweise verwendete Kochtöpfe mit umgelegtem Rand zu einem Dampfdrucktopf ergänzt werden können, der zuverlässig bedienbar ist und bei dem Bedienungsfehler weitgehend verhindert werden.

Diese Aufgabe wird von einem Deckel der eingangs genannten Gattung mit den Merkmalen des Kennzeichens von Patentanspruch 1 gelöst. Vorteilhafte Ausgestaltungen sind Gegenstand der Unteransprüche.

Erfindungsgemäß sind die Spannsegmente im Innenrand des Deckels angeordnet und umschließen den Kochtopf unterhalb seines umgelegten Randes spannend, wenn der Verschlußhebel in eine Verriegelungsstellung verschwenkt ist, wobei sich der Dichtring an den Rand des Kochtopfes anlegt, weiterhin überdeckt der Verschlußhebel in seiner Verriegelungsstellung eine Restdrucksperre, deren Sperrelement mit dem Verschlußhebel in Eingriff ist, wenn im Garraum des Kochtopfes ein Überdruck herrscht.

Die Spannsegmente werden am Innenrand des Deckels geführt und sind zuverlässig in der Lage gehalten, die erforderlich ist, um das Spannen der Segmente unterhalb des umgelegten Randes des Kochtopfes zu gewährleisten. Die Spannsegmente sind einem Verriegelungsmechanismus im Verschlußhebel zugeführt. Sobald der Verschlußhebel in seine Verriegelungsstellung verschwenkt ist, liegen die beiden Segmente im Spannschluß an dem Kochtopf an. Gleichzeitig sorgt der Dichtring für die Abdichtung des Deckels und des Kochtopfes nach außen. Da der Verschlußhebel nun die vorgesehene Restdrucksperre überdeckt, ist es unmöglich, den Hebel zu verschwenken, solange nicht ein vollständiger Druckausgleich im Garraum des Kochtopfes mit der Umgebung herbeigeführt ist. Solange ein auch nur geringer Restdruck herrscht, bleibt das Sperrelement der Restdrucksperre mit dem Verschlußhebel in Eingriff und verhindert ein ungewolltes oder fahrlässiges Verschwenken des Verschlußhebels.

Es kann der Verschlußhebel eine Einrichtung zum Offenhalten der Restdrucksperre in der Offenstellung des Verschlußhebels aufweisen. Dadurch wird ein Druckaufbau verhindert, der Kochtopf kann unter normalen Druckbedingungen betrieben werden, wenn dies gewünscht wird.

Eine besonders bevorzugte Ausführungsform für die Restdrucksperre besteht aus einem in vertikaler Richtung bewegbaren Sicherungskolben, der bei Überdruck im Garraum des Kochtopfes in eine im Verschlußhebel angeordnete Ausnehmung verlagerbar ist. Damit kann eine einzige und eindeutige Stellung des Verschlußhebels definiert werden, in der die Restdrucksperre schließen kann, um im Inneren des Kochtopfes einen Druck aufzubauen.

Insbesondere bei einer derartigen Ausführungsform der Erfindung kann die Einrichtung zum Offenhalten der Restdrucksperre eine seitlich am Verschlußhebel angebracht Abdeckplatte sein, welche den Sicherungskolben wenigstens in der Offenstellung des Verschlußhebels überdeckt. Bei geeigneter Ausbildung der Abdeckplatte und des Verschlußhebels wird wiederum erreicht, daß ein Druckaufbau lediglich in der Verriegelungsstellung erfolgen kann, nicht aber wenn der Verschlußhebel gar nicht oder nur unvollständig verschwenkt ist.

Um das Abdampfen zu beschleunigen, kann es vorgesehen sein, den Verschußhebel in der Verriegelungsstellung verlagerbar auszugestalten, wobei durch das Verlagern die Restdrucksperre öffenbar ist.

Dabei kann der Verschlußhebel um eine horizontale Achse kippbar oder in Richtung seiner Vertikalachse verlagerbar sein. Auch andere Maßnahmen sind denkbar, jedenfalls muß erreicht werden, daß beispielsweise auf den Sicherungskolben der Restdrucksperre ein Preßdruck ausgeübt wird, so daß eine Verbindung zwischen Garraum des Kochtopfes und der Umgebung hergestellt wird.

Der sichere Sitz des Deckels auf dem Kochtopf ist insbesondere dann gewährleistet, wenn am Innenrand des Deckels ein Haltesegment vorgesehen ist, das unter den umgelegten Rand des Kochtopfes greift.

Für die Spannsegmente sind sämtliche Materialien geeignet, deren Zugfestigkeit ausreicht, um auch im Langzeitbetrieb für den festen Sitz des Deckels auf dem Kochtopf zu sorgen. Bevorzugt ist dabei Stahl.

Im Bereich des Verschlußhebels ist an jedem der Spannsegmente ein Bügel vorgesehen, wobei die Bügel eine Führung für am Verschlußhebel angebracht Bolzen bilden. Beim Verschwenken des Verschlußhebels bewegen sich dann die im gegenseitigen Abstand voneinander festgelegten Bolzen in den Bügeln und zwingen so die Spannsegmente im Bereich des Verschlußhebels aufeinander zu. Dadurch legen sich die Spannsegmente an die Wand des Kochtopfes an.

Bevorzugt begrenzt die Länge der Bügel den Stellweg jeweils eines der Bolzen und definiert die Verriegelungsstellung des Verschlußhebels. Dazu sind zweckmäßigerweise die Längen der Bügel unterschiedlich, so daß einer der Bolzen am inneren Ende des kürzeren der Bügel anschlägt, wenn der Verschlußhebel in Offenstellung ist, der andere Bolzen hingegen in der Verriegelungsstellung am Ende des längeren der Bügel anliegt.

Die Spannsegmente können durch den Dichtring geführt sein, durch eine geeignete Ausprägung des Deckels oder durch ein in den Deckel eingebrachtes U-Profil, das entweder eingeschweißt oder eingebördelt sein kann.

Der Sicherungskolben der Restdrucksperre kann in einer Öffnung im Deckel geführt sein, es kann aber auch vorteilhaft sein, am Verschlußhebel zusätzlich eine Gehäuseplatte vorzusehen, welche einen Durchzug aufweist, der in eine entsprechende Öffnung des Deckels ragt. Ein in diesem Durchzug geführter Sicherungskolben wird dann durch den vergrößerten Führungsweg stabiler in seiner Lage gehalten.

Aus Sicherheitsgründen ist es erforderlich, die Töpfe, die zusammen mit dem erfindungsgemäßen Deckel verwendet werden sollen, besonders zu codieren, beispielsweise über den Durchmesser oder über die Schnittrandhöhe und die Ausgestaltung des Randes, und den Deckel auf diese Maße abzustimmen, um zu verhindern, daß für hohe Drücke ungeeignete Töpfe zusammen mit diesem Deckel verwendet werden.

Im folgenden soll die Erfindung lediglich beispielhaft anhand der beigefügten Zeichnungen näher erläutert werden. Es zeigt:
- Fig. 1: einen Ausschnitt eines Deckels gemäß der vorliegenden Erfindung in Draufsicht,
- Fig. 1a: den Verschlußhebel mit Abdeckplatte,
- Fig. 2: die Anordnung von Haltesegment und Spannsegmenten bei einem erfindungsgemäßen Deckel,
- Fig. 2a: die Lage der Spannsegmente in Verriegelungsstellung,
- Fig. 3: eine Schnittangicht einer ersten Ausführungsform des erfindungsgemäßen Deckels im Bereich des Verschlußhebels,
- Fig. 4: eine Schnittansicht einer zweiten Ausführungsform des erfindungsgemäßen Deckels im Bereich des Verschlußhebels,
- Fig. 5: die Ausgestaltung der Anschlußstellen des Deckels zum Verschlußhebel,
- Fig. 6: die Anordnung von Spannsegmenten und Dichtring im Anschlußbereich von Deckel und Kochtopf,
- Fig. 7: die Anordnung von Spannsegmenten und Dichtring nach einer anderen Ausführungsform,
- Fig. 8: die Anordnung von Spannsegmenten und Dichtring nach einer dritten Ausführungsform und
- Fig. 9: die Anordnung von Spannsegmenten und Dichtring nach einer vierten Ausführungsform.

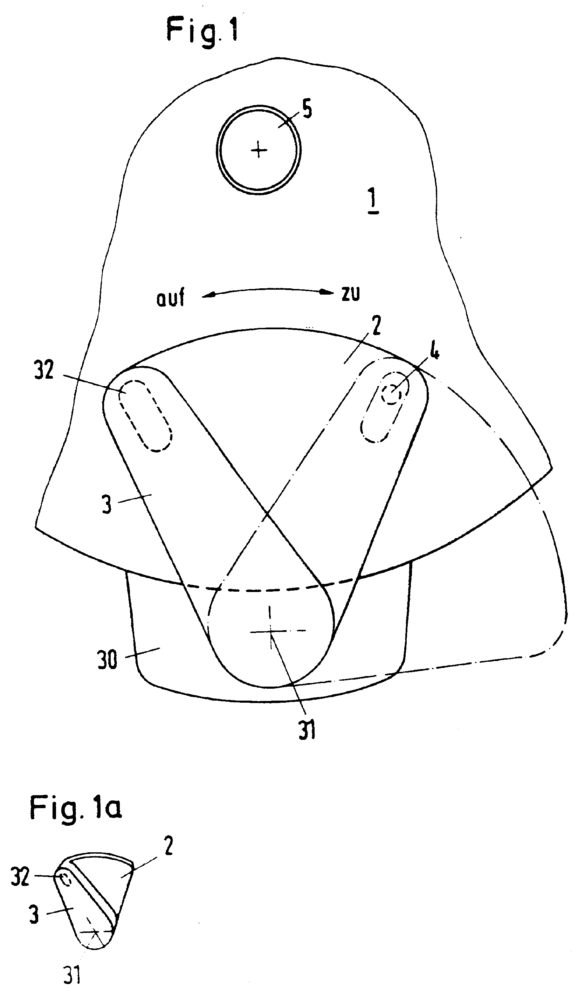

Fig. 1 zeigt im Ausschnitt einen im wesentlichen kreisrunden Deckel 1, dessen Durchmesser so gewählt ist, daß er auf für die betriebsüblichen Drücke geeignete Kochtöpfe mit umgelegtem Rand aufgesetzt werden kann. Die Kochtöpfe sind in ihrem Durchmesser weitgehend genormt, so daß nur eine begrenzte Anzahl der erfindungsgemäßen Deckelverschlüsse zur Verfügung gestellt werden müssen. Im Deckel 1 ist ein Dampfdruckventil 5 angeordnet, das sich öffnet, wenn der Druck im Garraum einen vorbestimmten Wert überschreitet. Am Deckel 1 ist weiterhin ein Ansatz 30 angebracht, der aus thermisch isolierendem Material bestehen kann und als Griff geeignet ist. Auf dem Ansatz 30 ist ein Verschlußhebel 3 mit einer integral angebrachten Abdeckplatte 2 vorgesehen, der um eine vertikale Achse 31 verschwenkbar ist. Im vorderen Bereich des Verschlußhebels 3 ist eine Ausnehmung 32 vorgesehen. In der durch "auf" angedeuteten Offenstellung des Verschlußhebels 3 liegt die Abdeckplatte 2 über einer Restdrucksperre 4, die im Deckel so angeordnet ist, daß sie bei Verschwenken des Verschlußhebels 3 von diesem überdeckt werden kann. Durch strichpunktierte Linien ist die Verriegelungsstellung des Verschlußhebels 3 dargestellt. In dieser Stellung liegt die Ausnehmung 32 über der Restdrucksperre 4, so daß diese in die Ausnehmung 32 eingreifen und den Verschlußhebel 3 verriegeln kann. Lediglich in dieser durch "zu" gekennzeichneten Verriegelungsstellung kann daher die Restdrucksperre 4 schließen, so daß ein Druckaufbau überhaupt möglich ist. In der Offenstellung oder in einer halbgeschlossenen Stellung des Verschlußhebels 3 wird die Restdrucksperre 4 jeweils durch die Abdeckplatte 2 offengehalten.

Fig. 1a zeigt eine Darstellung des Verschlußhebels 3 mit der Abdeckplatte 2. Der Verschlußhebel 3 ist langgestreckt und weist in seinem vorderen Bereich die Ausnehmung 32 auf. Zusammen mit der Abdeckplatte 2 bildet der Verschlußhebel 3 ein Kreissegment, welches um die Achse 31 verschwenkt werden kann.

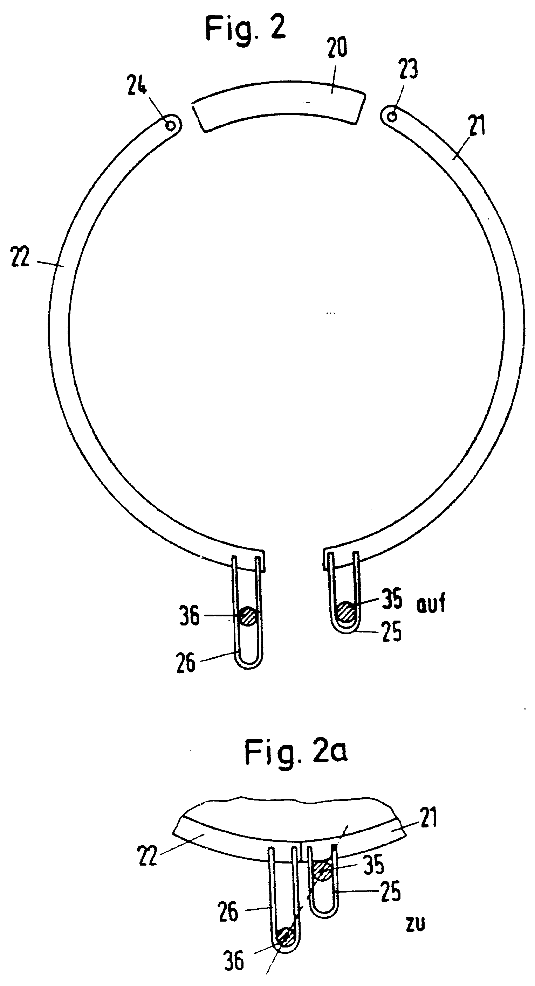

Fig. 2 zeigt die Anordnung von Haltesegment 20 und Spannsegmenten 21, 22 im Innenrand des Deckels. Die Spannsegmente 21, 22 sind bogenförmig gekrümmt und jeweils an einer Schwenkachse 23, 24 an einem ihrer äußersten Ende in der Nähe des Haltesegments 20 angelenkt. Die Spannsegmente 21, 22 und das Haltesegment 20 bilden eine im wesentlichen kreisförmige Anordnung. Das Haltesegment 20 ist so ausgebildet, daß es unter den umgelegten Rand des Kochtopfes greift und somit den Deckel in Bezug auf den Kochtopf so ausrichtet, daß die Spannsegmente 21, 22 dann genau unter den umgelegten Rand greifen. Gegenüber des Haltesegmentes 20 sind an den Spannsegmenten 21, 22 jeweils Bügel 25, 26 vorgesehen, die sich von den Spannsegmenten 21, 22 weg erstrecken. In diese Bügel greifen Bolzen 35, 36 des Verschlußhebels ein. In der in Fig. 2 dargestellten Offenstellung "auf" haben die Spannsegmente 21, 22 im Bereich der Bügel 25, 26 voneinander einen Abstand, der dem Abstand der Bolzen 35, 36 entspricht. Bei einem Verschwenken des Verschlußhebels bewegen sich die Bolzen 35, 36 innerhalb der Bügel 25, 26. Da der Bolzenabstand fest ist, bewegen sich beim Verriegeln die Spannsegmente 21, 22 aufeinander zu und schließen in der Verriegelungsstellung "zu" aneinander an, wie es in Fig. 2a gezeigt ist. Die Länge der Bügel 25, 26 ist so gewählt, daß Offenstellung und Verriegelungsstellung genau definiert sind. In der Offenstellung liegt der Bolzen 35 am äußeren Ende des Bügels 25 an, in der Verriegelungsstellung der Bolzen 36 am äußeren Ende des Bügels 26. In dieser Stellung schlägt im übrigen der Bolzen 35 an das Spannsegment 21, so daß eine nahezu spielfreie Stellung des Verschlußhebels in dieser Position erreicht wird.

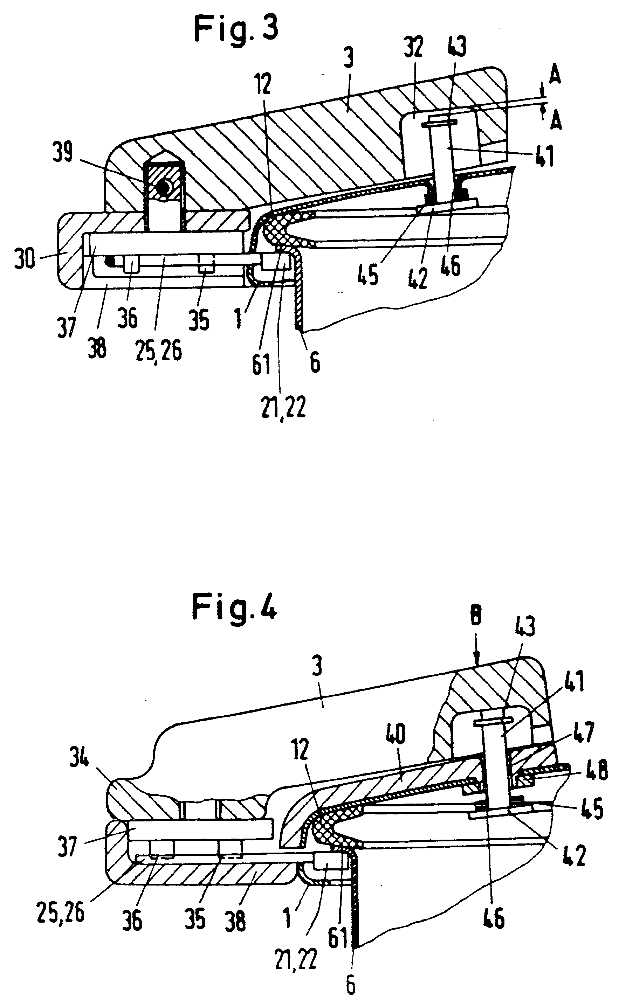

Fig. 3 zeigt einen Schnitt durch eine erste Ausführungsform des Deckels im Bereich des Verschlußhebels 3. Der Verschlußhebel 3 ist über eine Welle 39 mit einer Schwenkplatte 37 verbunden, an der die Bolzen 35, 36 angebracht sind. Die Schwenkplatte 37 ist in dem Ansatz 30 untergebracht, der zusammen mit einem Boden für den Abschluß der Anordnung nach außen sorgt. In das aus Ansatz 30 und Boden 38 gebildete Gehäuse ragen die Bügel 25, 26 der Spannsegmente 21, 22. In der Fig. 3 ist der Deckel 1 auf einen Kochtopf 6 aufgesetzt, wobei die Spannsegmente 21, 22 unter den Rand 61 des Kochtopfes greifen. Zwischen Deckel 1 und Kochtopf 6 liegt im Randbereich ein Dichtring 12. Der Deckel 1 ist mit einer Öffnung 46 versehen, die als Führung für einen Sicherungskolben 41, der ein Bestandteil der Restdrucksperre ist, dient. Der Sicherungskolben 41 ist in seinem unteren Bereich mit einem Ansatz 42 und einer Dichtung 45 versehen, so daß er die Öffnung 46 dicht verschließen kann, wenn er durch den im Garraum herrschenden Überdruck in die im Verschlußhebel 3 angebrachte Ausnehmung 32 greift. Im drucklosen Zustand des Topfes ist der Sicherungskolben 41 durch einen im oberen Bereich angebrachten Ansatz 43 gegen ein Herausfallen aus der Öffnung 46 gesichert. Die Länge des Sicherungskolbens 41 ist so gewählt, daß bei Überdruck im Garraum ein Absatnd A-A zur oberen Begrenzungsfläche der Ausnehmung 32 verbleibt. Hierdurch wird die Möglichkeit eröffnet, durch leichtes Drücken auf den verlagerbaren Verschlußhebel 3 den Sicherungskolben 41 abzusenken, um so das Abdampfen aus dem Garraum zu beschleunigen. Der Verschlußhebel 3 kann verschenkbar sein, wobei dazu erforderliche Maßnahmen im Bereich der Welle 39 vorgesehen sein können, er kann aber auch insgesamt in Richtung der Achse der Welle 39 verschiebbar gestaltet werden.

Fig. 4 zeigt eine zweite Ausführungsform des Deckels im Bereich des Verschlußhebels 3. Wiederum ist eine mit Bolzen 35, 36 versehene Schwenkplatte 37 von einem Boden 38 umschlossen, wobei dieser Boden im Außenbereich des Verschlußhebels eine hochgezogene Seitenwand aufweist. In dem durch den Verschlußhebel 3 und den Boden 38 gebildeten Gehäuse sind wiederum die Bügel 25, 26 der Spannsegmente 21, 22 untergebracht, die Bolzen 35, 36, welche an einer Schwenkplatte 37 befestigt sind, umschließen. Integral mit dem Boden 38 ausgebildet ist eine Gehäuseplatte 40, welcher in der Form an den Deckel 1 angepaßt ist und sich über den Bereich der Restdrucksperre hin erstreckt. Diese Gehäuseplatte 40 weist einen Durchzug 47 auf, der eine im Deckel 1 vorgesehene Öffnung 46 mitauskleidet. Um den Durchzug 47 herum ist an der Innenseite des Deckels 1 ein Anschlag 48 vorgesehen. Der Sicherungskolben 41 der Restdrucksperre ist, wie in der in Fig. 3 dargestellten Ausführungsform, ausgestaltet. Insbesondere kann er durch einen Druck in Richtung des Pfeiles B auf den Verschlußhebel 3 abgesenkt werden, so daß die Druckentlastung aus dem Garraum erfolgen kann. Der Verschlußhebel 3 weist im rückwärtigen Bereich einen Vorsprung 34 auf, welcher mit der Seitenwand des Bodens 38 abschließt.

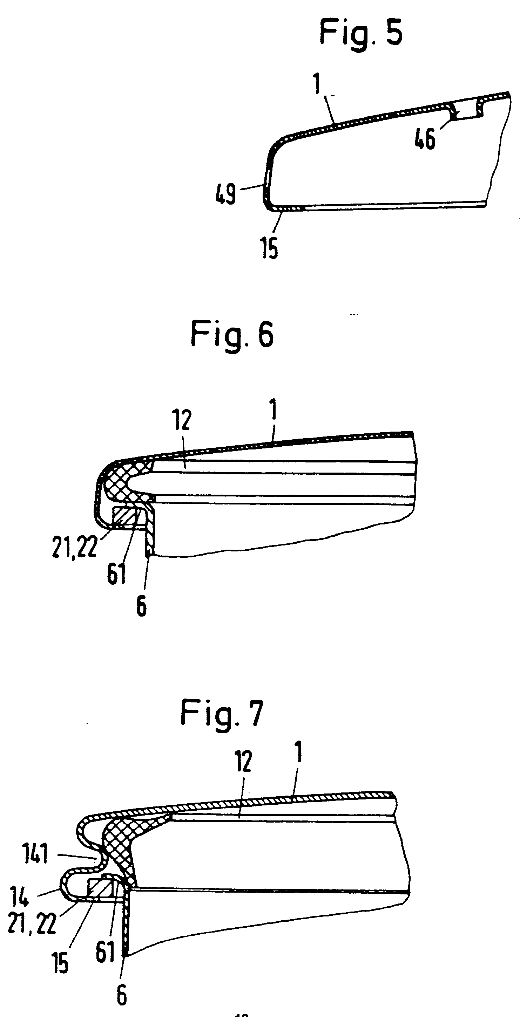

Fig. 5 zeigt die Ausgestaltung des Deckels 1 im Bereich des Verschlußhebels. Es ist eine Öffnung 46 in einem vorbestimmten Abstand zum Rand des Deckels angebracht, die entweder allein oder mit dem Durchzug einer Gehäuseplatte als Führung für die Restdrucksperre dient. Im Bereich der Seitenwand ist eine Bohrung 49 vorgesehen, durch die die Bügel der Spannsegmente geführt werden. Der Deckel 1 weist einen nach innen umgelegten Rand 15 auf, in den die Spannsegmente eingebracht sind.

Fig. 6 zeigt ein Beispiel der Führung der Spannsegmente 21, 22 im Deckel 1. Hier wird die Führung durch den im Innenrand des Deckels liegenden Dichtrings 12 gebildet. Dieser Dichtring 12 ist in seinen Abmessungen so gewählt, daß bei Aufsetzen des Deckels 1 auf den Kochtopf 6 die Spannsegmente 21, 22 direkt unter den umgelegten Rand 61 des Kochtopfes zu liegen kommen.

Eine weitere Möglichkeit der Führung ist in Fig. 7 dargestellt. Der Randbereich des Deckels 1 ist mit einer Ausprägung 14 versehen, die sich wellenförmig über den Bereich der Seitenkante erstreckt. Auf der nach innen gerichteten Einwellung 141 ruht der Dichtring 12, der so ausgeformt ist, daß er bei aufgesetztem Deckel 1 an der Innenkante des Kochtopfes 6 zu liegen kommt. Die Einwellung 141 ist weiterhin so ausgebildet, daß sie an den umgelegten Rand 61 des Kochtopfes 6 anschlägt und so den Abstand zwischen dem unteren Rand 15 des Deckels und dem Rand des Kochtopfes so definiert, daß die Haltesegmente 21, 22, welche auf dem Rand 15 ruhen, unter den umgelegten Rand 61 greifen können.

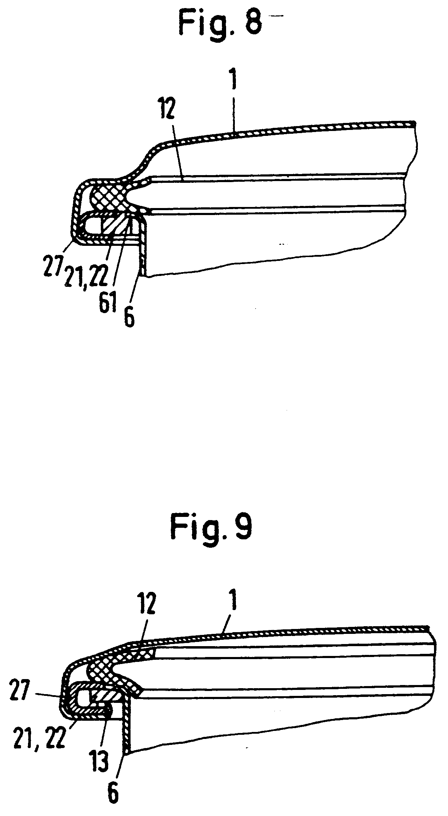

Bei der Ausführungsform nach Fig. 8 ist in den Deckelrand ein zum Kochtopf 6 hin offenes U-Profil 27 eingeschweißt, dessen oberer Schenkel im Bereich des umgelegten Randes 61 des Kochtopfes endet und so den erforderlichen Abstand für die Spannsegmente 21, 22 definiert. Auf dem oberen Schenkel und auf dem umgelegten Rand des Kochtopfes liebt der Dichtring 12, der das Profil 27 mit dem Rand des Kochtopfes ausrichtet.

Fig. 9 zeigt eine vierte Ausführungsform, bei der ebenfalls ein U-Profil in den Rand des Deckels 1 eingelegt ist, wobei der untere Schenkel des U-Profils 27 von einer Bördelkante 13 gehalten ist. Der Dichtring 12 richtet wiederum das U-Profil mit dem Rand des Kochtopfes 6 aus, so daß die im U-Profil 27 liegenden Spannsegmente 21, 22 richtig unter den umgelegten Rand 61 des Kochtopfes 6 geführt werden.

Bei sämtlichen hier dargestellten Ausführungsformen ist der Deckel 1 so ausgebildet, daß keine Überschneidungen zwischen Kante des umgelegten Randes 61 des Kochtopfes und dem Deckelrand auftreten.

Die in der vorstehenden Beschreibung sowie in den Ansprüchen und der beiliegenden Zeichnung offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Deckel (1) für Kochtöpfe mit umgelegtem Rand, mit zwei bogenförmigen Spannsegmenten (21,22), die jeweils an einer Schwenkachse (23,24) angelenkt sind und die mit einem um eine senkrechte Achse (31) verschwenkbaren Verschlußhebel (3) verbunden sind, der am Außenrand des Deckels (1) angeordnet ist, mit einem in den Innenrand des Deckels (1) eingelegten Dichtring (12) und mit einem Dampfdruckventil (5), dadurch gekennzeichnet, daß die Spannsegmente (21, 22) im Innenrand des Deckels (1) angeordnet sind und den Kochtopf (6) unterhalb seines umgelegten Randes (61) spannend umschließen, wenn der Verschlußhebel (3) in eine Verriegelungsstellung verschwenkt ist, wobei sich der Dichtring (12) an den Rand des Kochtopfes anlegt, und daß der Verschlußhebel (3) in seiner Verriegelungsstellung eine Restdrucksperre (4) überdeckt, deren Sperrelement (41) mit dem Verschlußhebel (3) in Eingriff ist, wenn im Garraum des Kochtopfes ein Überdruck herrscht.

2. Deckel nach Anspruch 1, dadurch gekennzeichnet, daß der Verschlußhebel (3) eine Einrichtung (2) zum Offenhalten der Restdrucksperre (4) in der Offenstellung des Verschlußhebels (3) aufweist.

3. Deckel nach Anspruch 1 oder 2, dadurch gekennzeichnet, daß die Restdrucksperre (4) einen in vertikaler Richtung bewegbaren Sicherungskolben aufweist, der bei Überdruck im Garraum des Kochtopfes (6) in eine im Verschlußhebel (3) angeordnete Ausnehmung (32) verlagerbar ist.

4. Deckel nach Anspruch 2 oder 3, dadurch gekennzeichnet, daß die Einrichtung (2) zum Offenhalten der Restdrucksperre (4) eine seitlich am Verschlußhebel (3) angebrachte Abdeckplatte (2) ist, welche den Sicherungskolben (41) wenigstens in der Offenstellung des Verschlußhebels (3) überdeckt.

5. Deckel nach einem der Ansprüche 1 bis 4, dadurch gekennzeichnet, daß der Verschlußhebel (3) in der Verriegelungsstellung verlagerbar ist, wobei durch das Verlagern die Restdrucksperre (4) öffenbar ist.

6. Deckel nach Anspruch 5, dadurch gekennzeichnet, daß der Verschlußhebel (3) um eine horizontale Achse kippbar ist.

7. Deckel nach Anspruch 5, dadurch gekennzeichnet, daß der Verschlußhebel (3) in Richtung seiner vertikalen Achse (31) verlagerbar ist.

8. Deckel nach einem der Ansprüche 1 bis 7, dadurch gekennzeichnet, daß ein Haltesegment (20) am Innenrand (10) des Deckels vorgesehen ist, das unter den umgelegten Rand (61) des Kochtopfes (6) greift.

9. Deckel nach einem der Ansprüche 1 bis 8, dadurch gekennzeichnet, daß jedes der Spannelemente (21, 22) aus Stahl besteht.

10. Deckel nach einem der Ansprüche 1 bis 9, dadurch gekennzeichnet, daß im Bereich des Verschlußhebels (3) an jedem der Spannsegmente (21, 22) ein Bügel (25, 26) vorgesehen ist, wobei die Bügel (25, 26) eine Führung für am Verschlußhebel (3) angebrachte Bolzen (35, 36) bilden.

11. Deckel nach Anspruch 10, dadurch gekennzeichnet, daß die Länge der Bügel (25, 26) den Stellweg jeweils eines der Bolzen (35, 36) begrenzt und die Offenstellung und die Verriegelungsstellung des Verschlußhebels (3) definiert.

12. Deckel nach Anspruch 1 bis 11, dadurch gekennzeichnet, daß die Spannsegmente (21, 22) durch den Dichtring (12) geführt sind.

13. Deckel nach Anspruch 1 bis 11, dadurch gekennzeichnet, daß die Spannsegmente (21, 22) durch eine Ausprägung (14) des Deckels (1) geführt sind.

14. Deckel nach Anspruch 1 bis 11, dadurch gekennzeichnet, daß die Spannsegmente (21, 22) durch ein in den Deckel (1) eingebrachtes U-Profil (27) geführt sind.

15. Deckel nach Anspruch 14, dadurch gekennzeichnet, daß das U-Profil (27) in den Deckel (1) eingeschweißt ist.

16. Deckel nach Anspruch 14, dadurch gekennzeichnet, daß das U-Profil (27) in den Deckel (1) eingebördelt ist.

17. Deckel nach Anspruch 1 bis 16, dadurch gekennzeichnet, daß der Sicherungskolben (41) in einer Öffnung (46) im Deckel (1) geführt ist.

18. Deckel nach Anspruch 1 bis 17, dadurch gekennzeichnet, daß der Sicherungskolben (41) in einem Durchzug (47) einer am Verschlußhebel (3) vorgesehenen Gehäuseplatte (40) geführt ist.

## Claims

1. A lid (1) for cooking pots having a beaded edge, comprising two arcuate clamping segments (21, 22), each pivoted on a pivot (23, 24) and connected to a locking lever (3) pivotable about a vertical axis (31), said locking lever being aisposed at the outer edge of the lid (1), a gasket (12) being inserted in the inner edge of the lid (1), with a steam pressure valve (5) being provided, characterised in that the clamping segments (21, 22) are disposed in the inner edge of the lid (1) and clampingly enclose the cooking pot (6) beneath its beaded edge (61) when the locking lever (3) is pivoted into a locking position, in which the gasket (12) bears against the edge of the cooking pot, and in that in its locking position the locking lever (3) covers a residual pressure barrier (4), the barrier element (41) of which is in engagement with the locking lever (3) when there is a positive pressure in the cooking chamber of the cooking pot.

2. A lid according to claim 1, characterised in that the locking lever (3) comprises a means (2) for holding the residual pressure barrier (4) open in the open position of the locking lever (3).

3. A lid according to claim 1 or 2, characterised in that the residual pressure barrier (4) comprises a vertically movable plunger which, in the event of positive pressure in the cooking chamber of the cooking pot (6), can be moved into a recess (32) disposed in the locking lever (3).

4. A lid according to claim 2 or 3, characterised in that the means (3) for holding the residual pressure barrier (4) open is a cover plate (2) disposed laterally on the locking lever (3) and covering the plunger (41) at least in the open position of the locking lever (3).

5. A lid according to any one of claims 1 to 4, characterised in that the locking lever (3) is movable in the locking position, the residual pressure barrier (4) being openable by the movement.

6. A lid according to claim 5, characterised in that the locking lever (3) is tippable about a horizontal axis.

7. A lid according to claim 5, characterised in that the locking lever (3) is movable in the direction of its vertical axis (31).

8. A lid according to any one of claims 1 to 7, characterised in that a retaining segment (20) is provided on the inner edge (10) of the lid and engages beneath the beaded edge (61) of the cooking pot (6).

9. A lid according to any one of claims 1 to 8, characterised in that each of the clamping elements (21, 22) is of steel.

10. A lid according to any one of claims 1 to 9, characterised in that a yoke (25, 26) is provided near the locking lever (3) on each of the clamping segments (21, 22), the yokes (25, 26) forming a guide for bolts (35, 36) provided on the locking lever (3).

11. A lid according to claim 10, characterised in that the length of the yokes (25, 26) limits the travel of each of the bolts (35, 36) and defines the open position and the locking position of the locking lever (3).

12. A lid according to claims 1 to 11, characterised in that the clamping segments (21, 22) are guided by the gasket (12).

13. A lid according to claims 1 to 11, characterised in that the clamping segments (21, 22) are guided by a stamped portion (14) of the lid (1).

14. A lid according to claims 1 to 11, characterised in that the clamping segments (21, 22) are guided by a U-section (27) fitted in the lid (1).

15. A lid according to claim 14, characterised in that the U-section (27) is welded into the lid (1).

16. A lid according to claim 14, characterised in that the U-section (27) is crimped into the lid (1).

17. A lid according to claims 1 to 16, characterised in that the plunger (41) is guided in an opening (46) in the lid (1).

18. A lid according to claims 1 to 17, characterised in that the plunger (41) is guided in a passage (47) in a housing plate (40) provided on the locking lever (3).

## Revendications

1. Couvercle (1) pour marmite de cuisson à bord roulé, comportant deux segments de serrage (21, 22) en forme d'arcs, articulés chacun sur un axe de pivotement (23, 24) vertical et reliés à l'aide d'un levier de fermeture (3), susceptible de pivoter autour d'un axe (31) vertical et disposé sur le bord extérieur du couvercle (1), et avec une soupape de surpression de vapeur (5) avec une bague d'étanchéité (12) logée dans le bord intérieur du couvercle(1), caractérisé en ce que les segments de serrage (21, 22) sont disposés sur le bord intérieur du couvercle (1) et entourent avec serrage la marmite (6), au-dessous de son bord (61) roulé, lorsque le levier de fermeture (3) pivote dans une position de verrouillage, la bague d'étanchéité (12) prenant appui sur le bord de la marmite, et en ce que le levier de fermeture (3) recouvre, dans sa position de verrouillage, un élément de blocage de pression résiduelle (4), dont l'élément bloquant (41) est en prise avec le levier de fermeture (3) lorsqu'une surpression règne dans l'enceinte de cuisson de la marmite.

2. Couvercle selon la revendication 1, caractérisé en ce que le levier de fermeture (3) présente un dispositif (2) pour maintenir ouvert l'élément de blocage de pression résiduelle (4) lorsque le levier de fermeture (3) se trouve dans la position ouverte.

3. Couvercle selon la revendication 1 ou 2, caractérisé en ce que l'élément de blocage de pression résiduelle (4) présente un piston de sécurité déplaçable en direction verticale, pouvant être déplacé dans un évidement (32) disposé dans le levier de fermeture (3) lorsqu'il y a une surpression dans l'enceinte de cuisson.

4. Couvercle selon la revendication 2 ou 3, caractérisé en ce que le dispositif (2) de maintien ouvert de l'élément de blocage de pression résiduelle (4) est une plaque de recouvrement (2) montée latéralement sur le levier de fermeture (3) et recouvrant le piston de sécurité (41) au moins lorsque le levier de fermeture (3) se trouve dans la position ouverte.

5. Couvercle selon l'une des revendications 1 à 4, caractérisé en ce que le levier de fermeture (3) est déplaçable dans la position de verrouillage, l'élément de blocage de pression résiduelle (4) pouvant être ouvert par déplacement.

6. Couvercle selon la revendication 5, caractérisé en ce que le levier de fermeture (3) est susceptible de basculer autour d'un axe horizontal.

7. Couvercle selon la revendication 5, caractérisé en ce que le levier de fermeture (3) est déplaçable dans la direction de son axe vertical (31).

8. Couvercle selon l'une des revendications 1 à 7, caractérisé en ce que, sur la bordure intérieure (10) du couvercle, est prévu un segment de maintien (20), saisissant au-dessous de la bordure (61) rabattue de la marmite (6).

9. Couvercle selon l'une des revendications 1 à 8, caractérisé en ce que chacun des éléments de serrage (21, 22) est en acier.

10. Couvercle selon l'une des revendications 1 à 9, caractérisé en ce que, dans la zone du levier de fermeture (3) est prévu, sur chacun des segments de serrage (21, 22), un étrier (25, 26), les étriers (25, 26) formant un guidage pour des boulons montés sur le levier de fermeture (3).

11. Couvercle selon la revendication 10, caractérisé en ce que la longueur des étriers (25, 26) délimite la course de réglage de chacun des boulons (35, 36) et définit la position d'ouverture et la position de verrouillage du levier de fermeture.

12. Couvercle selon les revendications 1 à 11, caractérisé en ce que les segments de serrage (21, 22) sont guidés au moyen de la bague d'étanchéité (12).

13. Couvercle selon les revendications 1 à 11, caractérisé en ce que les segments de serrage (21, 22) sont guidés au moyen d'une déformation (14) du couvercle (1).

14. Couvercle selon les revendications 1 à 11, caractérisé en ce que les segments de serrage (21, 22) sont guidés au moyen d'un profilé en U (27) introduit dans le couvercle (1).

15. Couvercle selon la revendication 14, caractérisé en ce que le profilé en U (27) est soudé dans le couvercle (1).

16. Couvercle selon la revendication 14, caractérisé en ce que le profilé en U (27) est serti dans le couvercle (1).

17. Couvercle selon les revendications 1 à 16, caractérisé en ce que le boulon de sécurité (41) est guidé dans une ouverture (46) ménagée dans le couvercle (1).

18. Couvercle selon les revendications 1 à 17, caractérisé en ce que le boulon de sécurité (41) est guidé dans un passage (47) d'une plaque de carter (40) prévue sur le levier de fermeture (3).
